# EUROPEAN PATENT APPLICATION

(11) **EP 4 840 823 A1**
(43) Date of publication of application: **18.11.2026**
(21) Application number: 25875451.4
(22) Date of filing: 30.09.2025
(51) Int. Cl.: C01B 32/174, H01M 4/62

(54) **METHOD FOR PREPARING CARBON NANOTUBE DISPERSION**

(30) Priority: 02.10.2024 KR 20240133903; 29.09.2025 KR 20250141400
(71) Applicant: LG Chem, Ltd., Seoul 07336 (KR)
(72) Inventor: KIM, Taehyeob, Seoul 07796 (KR); BAEK, Hyeon Hui, Seoul 07796 (KR); LEE, Jumin, Seoul 07796 (KR); AHN, Jeong Hyuk, Seoul 07796 (KR); YOON, Kiyoul, Seoul 07796 (KR)
(74) Representative: Hoffmann Eitle
(86) International application number: PCT/KR2025/015446
(87) International publication number: WO 2026/075457

(57) **Abstract**

The present invention relates to a method for preparing a carbon nanotube dispersion comprising carbon nanotubes, a solvent, a primary dispersant, a secondary dispersant, and an additive, wherein these components are added in a stepwise manner to effectively disperse the carbon nanotubes.

By using carbon nanotube dispersion prepared according to the method for preparing a carbon nanotube dispersion according to one example of the present invention, it exhibits a small time-dependent change in viscosity and a relatively low viscosity, and can disperse carbon nanotubes uniformly and effectively.

## Description

### [Technical Field]

This application claims the benefit of priority to Korean Patent Application No. 10-2024-0133903, filed October 2, 2024, and Korean Patent Application No. 10-2025-0141400, filed September 29, 2025, the disclosures of which are incorporated herein by reference in their entirety.

The present invention relates to a method of preparing a carbon nanotube dispersion. Particularly, the present invention relates to a method for preparing a carbon nanotube dispersion in which the carbon nanotubes are dispersed by adding dispersants in a stepwise manner in the preparation of the carbon nanotube dispersion.

### [Related Art]

As the technology development and demand for mobile devices increase, the demand for secondary batteries as power sources is growing rapidly. Among these secondary batteries, lithium secondary batteries with high energy density and voltage, long cycle life, and low self-discharge rate are commercially available and widely used. As an electrode for these high-capacity lithium secondary batteries, research is underway on the method of improving electrode density to produce an electrode with higher energy density per unit volume.

In general, a high-density electrode is formed by molding electrode active material particles having a size of several micrometers to several tens of micrometers using a high-pressure press. During the molding process, the particles may be deformed and the space between the particles may be reduced, which can lead to decreased electrolyte permeability. In order to solve these problems, the electrodes are being manufactured using conductive materials with excellent electrical conductivity and strength. The conductive materials, positioned between the electrode active materials, can maintain the micropores between the active material particles even during the molding process, thereby facilitating easy penetration of the electrolyte, and can reduce the resistance in the electrode due to its excellent electrical conductivity. Among these conductive materials, the use of carbon nanotubes, a fibrous carbon-based material that can further reduce electrode resistance by forming electrical conductive pathways within the electrode, is increasing.

The carbon nanotubes are microscopic carbon fibers consisting of carbons connected by hexagonal rings to form a long tube-like structure with a diameter of 1 µm or less. The carbon nanotubes are expected to be applied in various fields and practically applied because of their high conductivity, tensile strength, and heat resistance due to their unique structure. In order to commercialize the carbon nanotubes as a conductive material, it is necessary to prepare them in a dispersion state rather than a powder state. However, due to their strong agglomeration, the carbon nanotubes are difficult to reduce the viscosity when prepared as a dispersion, and even if the viscosity is reduced, the viscosity rises rapidly over time, making it difficult to apply them in actual processes.

To address this issue, mechanical dispersion methods such as sonication have been proposed to disperse carbon nanotubes in dispersion medium. However, mechanical dispersion methods have problems such as agglomeration of carbon nanotubes upon completion of the ultrasonic irradiation. When carbon nanotubes agglomerate, coating properties deteriorate during the process or it becomes difficult to obtain products of uniform thickness.

Therefore, a technology that can effectively disperse carbon nanotubes is required in this technical field. Therefore, the inventor of the present invention has found that carbon nanotubes can be effectively dispersed by adding dispersants in a stepwise manner in the preparation of a carbon nanotube dispersion, and after continuous research, has completed the present invention.

### [Prior Art Reference]

### [Patent Reference]

(Patent Reference 1) Korean Registered Patent No. 10-2482505 (December 19, 2019)
(Patent Reference 2) Korean Registered Patent No. 10-2519919 (January 5, 2023)

### [Detailed Description of the Invention]

### [Technical Problem]

The present invention relates to a method for preparing a carbon nanotube dispersion, and seeks to provide a method for preparing a carbon nanotube dispersion that can effectively disperse carbon nanotubes by adding dispersants and an additive in a stepwise manner, thereby to reduce time-dependent changes in viscosity in the dispersion.

### [Technical Solution]

According to a first aspect of the present invention, the present invention provides a method of preparing a carbon nanotube dispersion comprising carbon nanotubes, a solvent, a primary dispersant, a secondary dispersant, and an additive, wherein the method comprises the steps of: (1) adding and mixing the carbon nanotubes, the primary dispersant, and the solvent; (2) adding and mixing the secondary dispersant and the solvent to the mixture of step (1); and (3) adding and mixing the additive and the solvent to the mixture of step (2).

In one example of the present invention, the primary dispersant may comprise at least one of hydrogenated nitrile butadiene rubber (HNBR) and polyvinyl pyrrolidone (PVP), the secondary dispersant may comprise at least one of polypropylene, styrene, cellulose, polycaprolactone (PCL), polypropylene glycol (PPG), and polyethylene glycol (PEG), and the additive may comprise at least one of 2-amino-2-methyl-1-propanol, 2-methylamino-2-methyl-1-propanol, and monoethanolamine.

In one example of the present invention, the preparation method may further comprise, after step (3), step of (4) high-pressure homogenizing the mixture obtained in step (3) by means of a high pressure homogenizer at a pressure of 5,000 psi to 30,000 psi, one to seven times.

In one example of the present invention, the content of carbon nanotubes in the carbon nanotube dispersion may be 2% by weight to 7% by weight based on a total of 100% by weight of the dispersion.

In one example of the present invention, the content of carbon nanotubes in the mixture obtained in step (1) above may be 10% by weight to 20% by weight based on a total of 100% by weight of the dispersion, the content of carbon nanotubes in the mixture obtained in step (2) above may be 5% by weight to 15% by weight based on a total of 100% by weight of the dispersion, and the content of carbon nanotubes in the mixture obtained in step (3) above may be 2% by weight to 8% by weight based on a total of 100% by weight of the dispersion.

In one example of the present invention, the step (1) may be performed for 2 hours to 7 hours, the step (2) may be performed for 0.1 hours to 2 hours, and the step (3) may be performed for 0.1 hours to 2 hours.

In one example of the present invention, the primary dispersant in step (1) may be added in an amount of 10 parts by weight to 50 parts by weight based on a total of 100 parts by weight of carbon nanotubes, the secondary dispersant in step (2) may be added in an amount of 1 part by weight to 15 parts by weight based on a total of 100 parts by weight of carbon nanotubes, and the additive in step (3) may be added in an amount of 1 part by weight to 30 parts by weight based on a total of 100 parts by weight of carbon nanotubes.

In one example of the present invention, the carbon nanotubes may be multi-walled carbon nanotubes (MWCNTs).

In one example of the present invention, the carbon nanotube dispersion may have a viscosity increase rate of 50% or less after being left at 25°C for no more than 5 days.

In one example of the present invention, the solvent may be methylpyrrolidone (N-Methyl-2-pyrrolidone, NMP).

According to a second aspect of the present invention, the present invention provides a slurry composition for preparing an electrode of a lithium secondary battery, comprising a carbon nanotube dispersion prepared by the preparation method above and an electrode active material.

### [Advantageous Effects]

The method of preparing a carbon nanotube dispersion according to one example of the present invention enables the preparation of a carbon nanotube dispersion that exhibits a relatively low viscosity, with a small time-dependent change in viscosity, and that is capable of dispersing carbon nanotubes uniformly and effectively, by adding the dispersants and additive in a stepwise manner.

Furthermore, by utilizing the carbon nanotube dispersion prepared by the preparation method of the present invention in an electrode slurry composition, electrodes and secondary batteries having excellent capacity characteristics and cycling characteristics can be prepared.

### [Best Mode]

Examples of the present invention are described in detail below. The terms and words used in this specification and claims are not to be construed in their ordinary or dictionary sense, but rather in a sense and concept consistent with the technical idea of the present invention, based on the principle that the inventor may define the terms appropriately in order to best explain the invention. Accordingly, it is to be understood that the configurations described in the examples described herein are only the most preferred examples of the present invention and do not represent all of the technical ideas of the invention, and that there may be various equivalents and variations that may be substituted for them at the time of the application.

As used herein, the term "substitution" means the replacement of a hydrogen atom bonded to a carbon atom of a compound with another substituent, and the position to be substituted is not particularly limited as long as the hydrogen atom can be substituted, i.e., as long as the substituent is capable of being substituted, and if it is substituted with two or more substituents, these substituents may be the same or different.

In this specification, when a certain part "comprise(s)" a certain component, it means that, unless otherwise explicitly stated, the part may further include other components rather than excluding them.

As used herein, the unit "%" means "% by weight" unless otherwise explicitly indicated.

As used herein, the average particle size "D₅₀" refers to the particle size corresponding to 50% of cumulative volume. The D₅₀ can be measured, for example, using a laser diffraction method. The laser diffraction method is generally capable of measuring particle sizes ranging from the submicron scale to several millimeters, and provides results with highly reproducibility and highly resolution.

### Method of Preparing Carbon Nanotube Dispersion

Hereinafter, a method for preparing a carbon nanotube dispersion according to one example of the present invention will be described.

The method of preparing a carbon nanotube dispersion according to the present invention is a method of preparing a carbon nanotube dispersion comprising carbon nanotubes, a solvent, a primary dispersant, a secondary dispersant, and an additive, and the method may comprise the steps of: (1) adding and mixing the carbon nanotubes, the primary dispersant, and the solvent; (2) adding and mixing the secondary dispersant and the solvent to the mixture of step (1); and (3) adding and mixing the additive and the solvent to the mixture of step (2). It is not necessary to perform the aforementioned steps sequentially to disperse carbon nanotubes; however, manufacturing them in the order described above may be advantageous for the dispersion of carbon nanotubes. Specific descriptions of the carbon nanotubes, solvent, primary dispersant, secondary dispersant, and additive used in the above method of preparing a carbon nanotube dispersion can be substituted with those described in the following description of the carbon nanotube dispersion.

In step (1), the carbon nanotubes, primary dispersant, and solvent are added and mixed. The mixing to prepare the carbon nanotube primary dispersion may be performed by conventional mixing methods, more particularly, by a mixing device such as a planetary mixer, a paradoxical mixer, a homo mixer, a pony mixer, a change-can mixer, a Hobert mixer, a butterfly mixer, a stone mill, a homogenizer, a bead mill, a ball mill, a basket mill, an attrition mill, an universal stirrer, a clear mixer, or a TK mixer, at a rotational speed of 300 rpm to 5,000 rpm.

Step (1) can be performed for 2 to 7 hours, preferably 2 hours or more, 2.5 hours or more, 3 hours or more, 3.5 hours or more, 4 hours or more, 4.5 hours or more, and 7 hours or less, 6.5 hours or less, 6 hours or less, 5.5 hours or less, 5 hours or less, or 4.5 hours or less.

The content of carbon nanotubes in the mixture obtained in step (1) may be 10% by weight to 20% by weight, based on a total of 100% by weight of the dispersion, and may be 10% by weight or more, 11% by weight or more, 12% by weight or more, 13% by weight or more, 14% by weight or more, 15% by weight or more, and 20% by weight or less, 19% by weight or less, 18% by weight or less, 17% by weight or less, 16% by weight or less, or 15% by weight or less.

In step (1), the primary dispersant may be comprised in an amount of 10 parts by weight to 50 parts by weight, more particularly 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, 20 parts by weight or more, 21 parts by weight or more, 22 parts by weight or more, 23 parts by weight or more, 24 parts by weight or more, 25 parts by weight or more, 26 parts by weight or more, 27 parts by weight or more, 28 parts by weight or more, 29 parts by weight or more, or 30 parts by weight or more, and may be comprised in an amount of 50 parts by weight or less, 49 parts by weight or less, 48 parts by weight or less, 47 parts by weight or less, 46 parts by weight or less, 45 parts by weight or less, 44 parts by weight or less, 43 parts by weight or less, 42 parts by weight or less, 41 parts by weight or less, 40 parts by weight or less, 39 parts by weight or less, 38 parts by weight or less, 37 parts by weight or less, 36 parts by weight or less, 35 parts by weight or less, 34 parts by weight or less, 33 parts by weight or less, 32 parts by weight or less, or 31 parts by weight or less, based on 100 parts by weight of carbon nanotubes in the carbon nanotube dispersion.

If the primary dispersant is included in an amount of less than 10 parts by weight based on 100 parts by weight of carbon nanotubes, insufficient dispersion may occur due to lack of the dispersant content, and if the content of the primary dispersant exceeds 50 parts by weight, there may be agglomeration of solids in the dispersion as the content of the primary dispersant is excessive.

In step (2), the secondary dispersant and solvent may be added to the mixture obtained in step (1) and mixed. The mixing may be carried out by the mixing methods described in step (1).

Step (2) can be performed for 0.1 to 2 hours, preferably 0.1 hours or more, 0.3 hours or more, 0.5 hours or more, 0.7 hours or more, 0.9 hours or more, or 1 hour or more, and 2 hours or less, 1.8 hours or less, 1.6 hours or less, 1.4 hours or less, 1.2 hours or less, or 1 hour or less.

The content of carbon nanotubes in the mixture obtained in step (2) may be 5% by weight to 15% by weight, based on a total of 100% by weight of the dispersion, and may be 5% by weight or more, 6% by weight or more, 7% by weight or more, 8% by weight or more, 9% by weight or more, 10% by weight or more, and 15% by weight or less, 14% by weight or less, 13% by weight or less, 12% by weight or less, 11% by weight or less, or 10% by weight or less.

In step (2), the secondary dispersant may be added in an amount of 1 part by weight to 15 parts by weight, more specifically, 1 part by weight or more, 3 parts by weight or more, 5 parts by weight or more, 7 parts by weight or more, 9 parts by weight or more, 11 parts by weight or more, and 15 parts by weight or less, 13 parts by weight or less, 11 parts by weight or less, 9 parts by weight or less, 7 parts by weight or less, 5 parts by weight or less, based on 100 parts by weight of carbon nanotubes in the carbon nanotube dispersion.

If the secondary dispersant is included in the carbon nanotube dispersion in the above content range, it can adsorb to the carbon nanotube surfaces which are not covered by the primary dispersant to provide additional dispersion, and can reduce the excess dispersant content that is not effectively adsorbed to the carbon nanotube surfaces to prevent agglomeration of the residual dispersant.

In step (3), the additive and solvent may be added to the mixture obtained in step (2) and mixed. The mixing may be carried out by the mixing methods described in step (1).

Step (3) can be performed for 0.1 to 2 hours, preferably 0.1 hours or more, 0.3 hours or more, 0.5 hours or more, 0.7 hours or more, 0.9 hours or more, or 1 hour or more, and 2 hours or less, 1.8 hours or less, 1.6 hours or less, 1.4 hours or less, 1.2 hours or less, or 1 hour or less.

The content of carbon nanotubes in the mixture obtained in step (3) may be 2% by weight to 8% by weight, based on a total of 100% by weight of the dispersion, and may be 2% by weight or more, 2.5% by weight or more, 3% by weight or more, 3.5% by weight or more, 4% by weight or more, 4.5% by weight or more, and 8% by weight or less, 7.5% by weight or less, 7% by weight or less, 6.5% by weight or less, 6% by weight or less, or 5.5% by weight or less.

In step (3), the additive may be added in an amount of 1 part by weight to 30 parts by weight, more specifically, 1 part by weight or more, 2 parts by weight or more, 3 parts by weight or more, 4 parts by weight or more, 5 parts by weight or more, 6 parts by weight or more, 7 parts by weight or more, 8 parts by weight or more, 9 parts by weight or more, 10 parts by weight or more, 11 parts by weight or more, 12 parts by weight or more, 13 parts by weight or more, 14 parts by weight or more, or 15 parts by weight or more, and 30 parts by weight or less, 29 parts by weight or less, 28 parts by weight or less, 27 parts by weight or less, 26 parts by weight or less, 25 parts by weight or less, 24 parts by weight or less, 23 parts by weight or less, 22 parts by weight or less, 21 parts by weight or less, 20 parts by weight or less, 19 parts by weight or less, 18 parts by weight or less, 17 parts by weight or less, or 16 parts by weight or less, based on 100 parts by weight of carbon nanotubes.

When the additive is added into the carbon nanotube dispersion, it can suppress strong binding forces and interfere with bonding between carbon nanotubes, thereby acting as a lubricant to reduce the viscosity of the carbon nanotube dispersion.

The method of dispersing carbon nanotubes according to one example of the present invention may further comprise, after step (3), the step of (4) high-pressure homogenizing the mixture of step (3). In the carbon nanotube dispersion described above, carbon nanotubes can be additionally dispersed by high-pressure homogenizing. The high-pressure homogenizing may be performed by a high pressure homogenizer, and the dispersion is achieved, for example, by pressurizing the mixture with a plunger pump of the high pressure homogenizer, and forcing it through a gap of a homogenizing valve, during which the mixture is subjected to forces such as cavitation, shear, impact or explosion.

The high-pressure homogenizing may be performed at a pressure of 5,000 psi to 30,000 psi, and may be performed at a pressure of 5,000 psi or more, 7,000 psi or more, 9,000 psi or more, 11,000 psi or more, 13,000 psi or more, or 15,000 psi or more, and 30,000 psi or less, 28,000 psi or less, 26,000 psi or less, 24,000 psi or less, 22,000 psi or less, or 20,000 psi or less.

The high-pressure homogenizing may be performed one to seven times, and may be performed at least once, at least twice, or at least three times, no more than seven times, no more than six times, or no more than five times.

### <Carbon Nanotube Dispersion>

The carbon nanotube dispersion prepared by the manufacturing method according to the present invention comprises carbon nanotubes, solvent, the primary dispersant which comprises one or more of hydrogenated nitrile butadiene rubber (HNBR) and polyvinyl pyrrolidone (PVP), the secondary dispersant which comprises one or more of styrene, cellulose, polycaprolactone (PCL), polypropylene glycol (PPG), and polyethylene glycol (PEG), and the additive which comprises one or more of 2-amino-2-methyl-1-propanol, 2-methylamino-2-methyl-1-propanol, and monoethanolamine. Hereinafter, each component of the carbon nanotube dispersion prepared by the manufacturing method according to the present invention will be described in detail.

### (1) Carbon nanotube

As used in the present invention, the term "carbon nanotube" is a secondary structure formed by the assembly of carbon nanotube monomers into whole or partial bundle type structure, wherein the carbon nanotube monomer has a graphite sheet having a cylindrical shape with a nano-sized diameter and a sp²-bonded structure. The graphite sheet may exhibit characteristics of a conductor or a semiconductor depending on the angle at which the graphite sheet is rolled and the structure thereof. The carbon nanotube monomers can be categorized into single-walled carbon nanotubes (SWCNTs), double-walled carbon nanotubes (DWCNTs), and multi-walled carbon nanotubes (MWCNTs) based on the number of bonds that constitute their walls.

As used herein, the term "bundle type" refers, unless otherwise stated, to a secondary shape in the form of a bundle or rope, wherein multiple carbon nanotube monomers are arranged in parallel with their monomer length axes substantially aligned in the same orientation, or are twisted or entangled after being arranged. The term "non-bundle type" or "entangled type" refers to a form in which carbon nanotube monomers are intertwined without forming any regular shape, such as a bundle or rope-like structure.

Carbon nanotubes are highly conductive, but they are also highly agglomerative due to the van der Waals force between carbon nanotubes. If the conductive material agglomerates, the conductive pathways within the electrode cannot be properly formed, and more materials are used to increase conductivity, resulting in a relatively small amount of active material, which can degrade the performance of the electrode, such as its capacity. Therefore, it has been difficult to commercialize carbon nanotubes as a conductive material.

The carbon nanotube dispersion according to one example of the present invention may include, but is not limited to, one or more of the following carbon nanotubes: single-walled, double-walled, and multi-walled carbon nanotubes, and may specifically include multi-walled carbon nanotubes.

Meanwhile, the carbon nanotubes may have an average diameter of, for example, 0.6 to 10 nm, preferably 0.8 to 5 nm, even more preferably 0.8 to 3 nm, and may be 0.8 nm or more, 0.9 nm or more, 1.0 nm or more, 1.1 nm or more, 1.2 nm or more, 1.3 nm or more, 1.4 nm or more, 1.5 nm or more, 1.6 nm or more, 1.7 nm or more, 1.8 nm or more, or 1.9 nm or more, and may be 3.0 nm or less, 2.9 nm or less, 2.8 nm or less, 2.7 nm or less, 2.6 nm or less, 2.5 nm or less, 2.4 nm or less, 2.3 nm or less, 2.2 nm or less, 2.1 nm or less, or 2.0 nm or less.

Further, the carbon nanotubes may have an average length of 0.5 to 20 µm, preferably 1 to 20 µm, more preferably 5 to 20 µm, and may be 5 µm or more, 7 µm or more, 9 µm or more, 11 µm or more, or 13 µm or more, and may be 20 µm or less, 18 µm or less, 16 µm or less, or 14 µm or less. If the average diameter and average length of the carbon nanotubes satisfy the above ranges, it is effective in reducing the viscosity of the dispersion and improving the storage stability, and excellent cycling characteristics can be realized in the application of an electrode active material.

In this case, the average diameter of the carbon nanotubes may be determined from SEM images of the carbon nanotube powder, and the average length of the carbon nanotubes may be determined from SEM images of the carbon nanotube dispersion.

The carbon nanotubes may be included in an amount of 2% by weight to 7% by weight based on a total of 100% by weight of the carbon nanotube dispersion, and may be included in an amount of 2% by weight or more, 2.5% by weight or more, 3.0% by weight or more, 3.5% by weight or more, or 4.0% by weight or more, and 7.0% by weight or less, 6.5% by weight or less, 6.0% by weight or less, 5.5% by weight or less, or 5% by weight or less. When the content of the carbon nanotubes satisfies the above range, excellent improvement of the dispersion viscosity and enhanced conductivity of a secondary battery prepared using the carbon nanotube dispersion can be achieved.

The BET specific surface area of the carbon nanotubes may be 150 m²/g or more, preferably 150 m²/g to 2,000 m²/g, such as 150 m²/g or more, 200 m²/g or more, 250 m²/g or more, 300 m²/g or more, 350 m²/g or more, 400 m²/g or more, 450 m²/g or more, 500 m²/g or more, 550 m²/g or more, 600 m²/g or more, 650 m²/g or more, 700 m²/g or more, 750 m²/g or more, 800 m²/g or more, 850 m²/g or more, 900 m²/g or more, 950 m²/g or more, 1000 m²/g or more, or 1050 m²/g or more, and may be 2000 m²/g or less, 1950 m²/g or less, 1900 m²/g or less, 1850 m²/g or less, 1800 m²/g or less, 1750 m²/g or less, 1700 m²/g or less, 1650 m²/g or less, 1600 m²/g or less, 1550 m²/g or less, 1500 m²/g or less, 1450 m²/g or less, 1400 m²/g or less, 1350 m²/g or less, 1300 m²/g or less, 1250 m²/g or less, 1200 m²/g or less, 1150 m²/g or less, or 1100 m²/g or less. The use of carbon nanotubes having a high BET specific surface area as described above enables effective formation of a conductive network between the electrode active materials, thereby improving the cycle characteristics of the secondary battery prepared by using the carbon nanotube dispersion.

The carbon nanotubes according to one example of the present invention can be purified by high temperature, acid, or a combination thereof. Specifically, a mixture of carbon nanotubes purified with high temperature and carbon nanotubes purified with acid can be used, wherein the ratio of carbon nanotubes purified with high temperature to carbon nanotubes purified with acid may be 4:6 to 8:2, 4:6 or more, 5:5 or more, or 6:4 or more, and 8:2 or less, 7:3 or less, 6:4 or less.

The carbon nanotube dispersion according to one example of the present invention can have a relatively high carbon nanotube content, as the carbon nanotubes can be uniformly dispersed. When a carbon nanotube dispersion with a low carbon nanotube content is used for the preparation of an electrode slurry, the solid content of the prepared electrode slurry is reduced. As a result, the thickness before applying and drying the electrode slurry (wet thickness) increases, and the calendering ratio measured after drying and calendering becomes higher, leading to a larger difference in the thickness ratio before and after drying and calendering. As such, higher calendering ratio may damage the compositions in the slurry, including the positive electrode active material, during the process, resulting in poor battery performance.

### (2) Dispersant

The carbon nanotube dispersion according to the present invention comprises dispersants for improving dispersibility of the carbon nanotubes, wherein the dispersant comprises a primary dispersant which comprises one or more of hydrogenated nitrile butadiene rubber (HNBR) and polyvinyl pyrrolidone (PVP), and a secondary dispersant which comprises one or more of styrene, cellulose, polycaprolactone (PCL), polypropylene glycol (PPG), and polyethylene glycol (PEG), and an additive which comprises one or more of 2-amino-2-methyl-1-propanol, 2-methylamino-2-methyl-1-propanol, and monoethanolamine.

In the carbon nanotube dispersion, the primary dispersant, secondary dispersant and additive serve to increase the dispersibility of the carbon nanotubes so that the carbon nanotubes can be evenly dispersed without agglomeration in the dispersion, and in particular, to suppress the viscosity change of the carbon nanotube dispersion over time, and reduce the average particle size of the dispersed particles.

In a carbon nanotube dispersion according to one example of the present invention, the primary dispersant may comprise at least one of hydrogenated nitrile butadiene rubber and polyvinylpyrrolidone. Specifically, it can include hydrogenated nitrile butadiene rubber.

A carbon nanotube dispersion according to one example of the present invention, in order to solve the problem that in a carbon nanotube dispersion comprising only the primary dispersant, the viscosity of the dispersion rises as the content of carbon nanotubes increases, the dispersion comprises, together with the primary dispersant, a secondary dispersant which comprises at least one of polypropylene, styrene, cellulose, polycaprolactone (PCL) and polypropylene glycol (PPG), and accordingly, it can exhibit excellent dispersibility compared to the carbon nanotube dispersion using only the conventional dispersant, resulting in less agglomeration of the dispersion particles and suppression of viscosity increase.

In order to prevent an excessive increase in the viscosity of the dispersion, a mixture of cellulose, polycaprolactone and polypropylene glycol may be used as the secondary dispersant.

In one example of the present invention, when a mixture of cellulose, polycaprolactone, and polypropylene glycol is used as the secondary dispersant, the cellulose may be included in an amount of 40% by weight to 80% by weight, based on a total of 100% by weight of the secondary dispersant, for example, 40% by weight or more, 45% by weight or more, 50% by weight or more, 55% by weight or more, 60% by weight or more, or 65% by weight or more, and 80% by weight or less, 75% by weight or less, 70% by weight or less, 65% by weight or less, 60% by weight or less, or 55% by weight or less.

In one example of the present invention, when a mixture of cellulose, polycaprolactone, and polypropylene glycol is used as the secondary dispersant, the polycaprolactone may be included in an amount of 5% by weight to 20% by weight, based on a total of 100% by weight of the secondary dispersant, for example, 5% by weight or more, 10% by weight or more, or 15% by weight or more, and 20% by weight or less, 15% by weight or less, or 10% by weight or less.

In one example of the present invention, when a mixture of cellulose, polycaprolactone, and polypropylene glycol is used as the secondary dispersant, the polypropylene glycol may be included in an amount of 5% by weight to 20% by weight, based on a total of 100% by weight of the secondary dispersant, for example, 5% by weight or more, 10% by weight or more, or 15% by weight or more, and 20% by weight or less, 15% by weight or less, or 10% by weight or less.

The carbon nanotube dispersion according to one example of the present invention may further comprise, in addition to the primary and secondary dispersants, an additive comprising one or more of 2-amino-2-methyl-1-propanol, 2-methylamino-2-methyl-1-propanol, and monoethanolamine. As the dispersion includes the additive, the carbon nanotubes are uniformly and effectively dispersed, so that the dispersion viscosity is further maintained at a lower level, and the viscosity increase over time can be further suppressed.

### (3) Solvent

The solvent of the carbon nanotube dispersion according to one example of the present invention is a dispersion medium for dispersing the carbon nanotube, primary dispersant, secondary dispersant and additive, which is used to pre-disperse the carbon nanotubes in the powder state in order to prevent agglomeration when this is used directly in the preparation of an electrode slurry composition.

The solvent may be, for example, an organic solvent comprising one or two or more heteroatoms selected from the group consisting of a nitrogen atom (N) and an oxygen atom (O) having a lone pair of electrons.

Specifically, examples of the solvent may include an amide-based polar organic solvent, such as dimethyl formamide (DMF), diethyl formamide, dimethyl acetamide (DMAc), or N-methyl pyrrolidone (NMP); alcohols, such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols, such as ethylene glycol, diethylene glycol, triethylene glycol, propylene glycol, 1,3-propanediol, 1,3-butanediol, 1,5-pentanediol, or hexylene glycol; polyhydric alcohols, such as glycerin, trimethylol propane, pentaerythritol, or sorbitol; glycol ethers, such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones, such as acetone, methyl ethyl ketone, methylpropyl ketone, or cyclopentanone; esters, such as ethyl acetate, γ-butyro lactone, or ε-propiolactone, and any one or a mixture of two or more thereof may be used. Preferably, N-methyl pyrrolidone (NMP) may be used.

### (4) Carbon nanotube dispersion

The carbon nanotube dispersion according to one example of the present invention is capable of reducing the viscosity of the dispersed particles contained in the dispersion, such as carbon nanotubes and composites of each dispersant, as the primary dispersant, secondary dispersant and additive enable uniform dispersion of the carbon nanotubes in the solvent as described above.

The carbon nanotube dispersion may have an initial viscosity of 0.1 to 10 Pa·s measured at 25 °C and 40 rpm, using a viscometer (Brookfield RV-4, Spindle: 04), such as 0.1 Pa·s or more, 0.2 Pa·s or more, 0.3 Pa·s or more, 0.4 Pa·s or more, 0.5 Pa·s or more, 0.6 Pa·s or more, 0.7 Pa·s or more, 0.8 Pa·s or more, 0.9 Pa·s or more, 1.0 Pa·s or more, 1.1 Pa·s or more, 1.2 Pa·s or more, 1.3 Pa·s or more, 1.4 Pa·s or more, 1.5 Pa·s or more, 1.6 Pa·s or more, 1.7 Pa·s or more, 1.8 Pa·s or more, 1.9 Pa·s or more, 2.0 Pa·s or more, 2.1 Pa·s or more, 2.2 Pa·s or more, 2.3 Pa·s or more, 2.4 Pa·s or more, 2.5 Pa·s or more, 2.6 Pa·s or more, 2.7 Pa·s or more, 2.8 Pa·s or more, 2.9 Pa·s or more, 3.0 Pa·s or more, 3.1 Pa·s or more, 3.2 Pa·s or more, 3.3 Pa·s or more, 3.4 Pa·s or more, 3.5 Pa·s or more, 3.6 Pa·s or more, 3.7 Pa·s or more, 3.8 Pa·s or more, 3.9 Pa·s or more, 4.0 Pa·s or more, 4.1 Pa·s or more, 4.2 Pa·s or more, 4.3 Pa·s or more, 4.4 Pa·s or more, 4.5 Pa·s or more, 4.6 Pa·s or more, 4.7 Pa·s or more, 4.8 Pa·s or more, 4.9 Pa·s or more, or 5.0 Pa·s or more, and may be 10.0 Pa·s or less, 9.9 Pa·s or less, 9.8 Pa·s or less, 9.7 Pa·s or less, 9.6 Pa·s or less, 9.5 Pa·s or less, 9.4 Pa·s or less, 9.3 Pa·s or less, 9.2 Pa·s or less, 9.1 Pa·s or less, 9.0 Pa·s or less, 8.9 Pa·s or less, 8.8 Pa·s or less, 8.7 Pa·s or less, 8.6 Pa·s or less, 8.5 Pa·s or less, 8.4 Pa·s or less, 8.3 Pa·s or less, 8.2 Pa·s or less, 8.1 Pa·s or less, 8.0 Pa·s or less, 7.9 Pa·s or less, 7.8 Pa·s or less, 7.7 Pa·s or less, 7.6 Pa·s or less, 7.5 Pa·s or less, 7.4 Pa·s or less, 7.3 Pa·s or less, 7.2 Pa·s or less, 7.1 Pa·s or less, 7.0 Pa·s or less, 6.9 Pa·s or less, 6.8 Pa·s or less, 6.7 Pa·s or less, 6.6 Pa·s or less, 6.5 Pa·s or less, 6.4 Pa·s or less, 6.3 Pa·s or less, 6.2 Pa·s or less, 6.1 Pa·s or less, 6.0 Pa·s or less, 5.9 Pa·s or less, 5.8 Pa·s or less, 5.7 Pa·s or less, 5.6 Pa·s or less, 5.5 Pa·s or less, 5.4 Pa·s or less, 5.3 Pa·s or less, 5.2 Pa·s or less, or 5.1 Pa·s or less. When the carbon nanotube dispersion has an initial viscosity within the above range, an electrode slurry can be easily prepared, and the electrode slurry comprising the carbon nanotube dispersion can have a suitable viscosity for forming an electrode.

Furthermore, the carbon nanotube dispersion according to one example of the present invention may have an increase in viscosity left at 25 °C for not more than 5 days, which is calculated by Formula 1 below, of 60% or less, such as 10% or more but not more than 60%, more specifically, 10% or more, 11% or more, 12% or more, 13% or more, 14% or more, 15% or more, 16% or more, 17% or more, 18% or more, 19% or more, 20% or more, 21% or more, 22% or more, 23% or more, 24% or more, 25% or more, 26% or more, 27% or more, or 28% or more, and 60% or less, 59% or less, 58% or less, 57% or less, 56% or less, 55% or less, 54% or less, 53% or less, 52% or less, 51% or less, 50% or less, 49% or less, 48% or less, 47% or less, 46% or less, 45% or less, 44% or less, 43% or less, 42% or less, 41% or less, 40% or less, 39% or less, 38% or less, 37% or less, 36% or less, 35% or less, 34% or less, 33% or less, 32% or less, 31% or less, 30% or less, or 29% or less. [Formula 1] 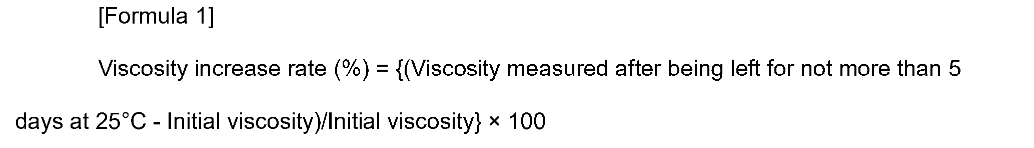 Viscosity increase rate (%) = {(Viscosity measured after being left for not more than 5 days at 25°C - Initial viscosity)/Initial viscosity} × 100

The viscosity after being left for not more than 5 days and the initial viscosity were measured at 25°C, 40 rpm.

### <Electrode Slurry Composition for Lithium Secondary Batteries and Electrode for Lithium Secondary Batteries>

According to one aspect of the present invention, the present invention provides an electrode slurry composition for lithium secondary batteries and an electrode for lithium secondary batteries comprising the carbon nanotube dispersion and an electrode active material.

The electrode slurry composition for lithium secondary batteries may be a positive electrode slurry composition.

If the electrode slurry composition for lithium secondary batteries is a positive electrode slurry composition, it may comprise the carbon nanotube dispersion, a positive electrode active material as an electrode active material, a binder, and a solvent and/or other additives such as viscosity modifiers or fillers, as needed.

The positive electrode active material is not specifically limited as long as it is a positive electrode active material well known in the art, for example, lithium cobalt oxide, lithium nickel oxide, lithium manganese oxide, lithium iron phosphate, lithium nickel manganese cobalt oxide, or combinations thereof. Specifically, examples of the positive electrode active material may include LiCoO₂, LiNiO₂, LiMn₂O₄, LiCoPO₄, LiFePO₄ and LiNiₐMn_{b}Co_{c}O₂ (wherein 0 < a, b, c < 1), but are not limited thereto.

The binder is a component that aids in the binding of the active material and the conductive material, and the binding to the current collector, and is typically added in an amount of 1% by weight to 30% by weight based on the total weight of the mixture comprising the electrode active material. Examples of this binder may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluororubber, and various copolymers thereof.

The solvent may include an organic solvent such as N-methyl pyrrolidone (NMP), dimethyl formamide (DMF), acetone or dimethyl acetamide, or water, which may be used alone or in a mixture of two or more of the foregoing. The amount of solvent may be sufficient to dissolve and disperse the electrode active material, binder, and conductive material, taking into account the application thickness of the slurry and the manufacturing yield.

The viscosity modifier may be carboxymethylcellulose, or polyacrylic acid, or the like, and by addition thereof, the viscosity of the electrode slurry may be adjusted to facilitate the preparation of the electrode slurry and an application process on the electrode current collector.

The filler is optionally used as a component to inhibit the expansion of the electrode, and is not particularly limited as long as it is a fibrous material that does not cause chemical changes in the battery, for example, an olefin-based polymer such as polyethylene, or polypropylene; or a fibrous material such as glass fibers, or carbon fibers.

If the electrode slurry composition is a composition of positive electrode slurry for forming a positive electrode, the positive electrode may be prepared by applying the composition of the positive electrode slurry to a positive electrode current collector followed by drying and calendering. Alternatively, a positive electrode may be prepared by casting the positive electrode slurry onto a separate support and then laminating the film obtained by peeling it off from the support onto the positive electrode current collector.

The thickness of the positive electrode active material layer formed by the positive electrode slurry may vary depending on the loading amount, or loading speed for applying the positive electrode slurry.

If the electrode for lithium secondary batteries according to the present invention is a positive electrode, the positive electrode is prepared by using a positive electrode slurry composition for lithium secondary batteries, wherein the positive electrode slurry composition comprises the carbon nanotube dispersion according to the present invention and a positive electrode active material, wherein the carbon nanotube dispersion comprises carbon nanotubes, a first dispersant comprising hydrated nitrile butadiene rubber, and a second dispersant comprising at least one polymer selected from the group consisting of polyethylene glycol, poly(1,2-propylene glycol), poly(1,3-propylene glycol), polycaprolactone, polytetramethylene glycol, and polystyrene, and further comprises a third dispersant comprising an alkanolamine-based compound, thereby to prepare an electrode and a secondary battery having excellent capacity characteristics and cycling characteristics.

The positive electrode current collector typically has a thickness of 3 µm to 500 µm. This positive electrode current collector is not particularly limited as long as it has a high conductivity without causing chemical changes in the battery. For example, stainless steel, aluminum, nickel, titanium, calcined carbon, or aluminum or stainless steel whose surface is treated with carbon, nickel, titanium, or silver may be used. Also, the positive electrode current collector may form microscopic irregularities on its surface to strengthen the binding of the positive electrode active material, and various forms, such as a film, sheet, foil, net, porous material, foam, or nonwoven material, may be used.

### <Lithium Secondary Battery>

The lithium secondary battery includes a positive electrode, a negative electrode, a separator interposed between the positive electrode and the negative electrode, and an electrolyte. The positive electrode is the same as described above, so specific descriptions thereon are omitted.

The negative electrode may be prepared by applying a negative electrode slurry composition on the negative electrode current collector followed by drying and calendering. Alternatively, it may be prepared by casting the negative electrode slurry onto a separate support and then laminating the film obtained by peeling it off from the support onto the negative electrode current collector.

The thickness of the negative electrode active material layer formed by the negative electrode slurry may vary depending on the loading amount, or loading speed for applying the negative electrode slurry.

The negative electrode current collector typically has a thickness of 3 µm to 500 µm. The negative electrode current collector is not particularly limited as long as it has a high conductivity without causing chemical changes in the battery, for example, copper, stainless steel, aluminum, nickel, titanium, calcined carbon, copper or stainless steel whose surface is treated with carbon, nickel, titanium, or silver, or aluminum-cadmium alloy may be used. Also, similar to the positive electrode current collector, the negative electrode current collector may form microscopic irregularities on its surface to strengthen the binding of the negative electrode active material, and various forms, such as a film, sheet, foil, net, porous material, foam, or nonwoven material, may be used.

The negative electrode slurry composition comprises a negative electrode active material, a conductive material, and a binder, and may further comprise a solvent and/or other additives such as viscosity modifiers or fillers, as needed. Binders, solvents, viscosity modifiers, fillers, and the like that are commonly used in the art may be employed, and specific examples thereof are the same as those described in the above section "Electrode Slurry Composition for Lithium Secondary Batteries and Electrode for Lithium Secondary Batteries"; thus, detailed descriptions thereof will be omitted hereinafter.

The conductive material used to impart conductivity to the electrode can be used without special restriction as long as it has electronic conductivity without causing chemical changes in the battery to be made. Specific examples include graphite, such as natural or artificial graphite; carbon-based materials, such as carbon black, acetylene black, ketjen black, channel black, furnace black, lamp black, thermal black, single-walled or multi-walled carbon nanotubes, carbon fibers, graphene, activated carbon, activated carbon fibers, and the like; metal powders or metal fibers, such as copper, nickel, aluminum, silver, and the like; conductive whiskers, such as zinc oxide or potassium titanate; conductive metal oxides, such as titanium oxide; or conductive polymers, such as polyphenylene derivatives, and one or a mixture of two or more selected therefrom may be used.

The negative electrode active material may be one or two or more negative electrode active materials selected from the group consisting of natural graphite, artificial graphite, carbonaceous materials; lithium-containing titanium composite oxide (LTO), metals (Me), which are Si, Sn, Li, Zn, Mg, Cd, Ce, Ni or Fe; alloys of the above metals (Me); oxides (MeOₓ) of the above metals (Me); and complexes of the above metals (Me) with carbon. The negative electrode active material may be comprised in an amount of 60% by weight to 98% by weight, more preferably 70% by weight to 98% by weight, based on the total weight of solids excluding the solvent from the negative electrode slurry.

The separator separates the negative electrode and the positive electrode and provides a pathway for lithium ion migration, and is not particularly limited as long as it is a material generally used as a separator in a lithium secondary battery, and it preferably exhibits a low resistance to ion migration of the electrolyte and an excellent electrolyte wettability. Specifically, a porous polymeric film, e.g., a porous polymeric film made of a polyolefin-based polymer such as an ethylene homopolymer, a propylene homopolymer, an ethylene/butene copolymer, an ethylene/hexene copolymer, or an ethylene/methacrylate copolymer, or a multilayer structure comprising two or more layers thereof, may be used. Also, conventional porous nonwovens may be used, for example, nonwovens made of a glass fiber having a high melting point or a polyethylene terephthalate fiber. In addition, a coated separator containing ceramic components or polymeric materials for heat resistance or mechanical strength may be used, optionally in a single-layer or multi-layer structure.

The electrolyte may include, but is not limited to, an organic liquid electrolyte, an inorganic liquid electrolyte, a solid polymeric electrolyte, a gel-type polymeric electrolyte, a solid inorganic electrolyte, a molten inorganic electrolyte, and the like that can be used in the manufacture of lithium secondary batteries. Specifically, the electrolyte may comprise an organic solvent and a lithium salt.

The organic solvent may be used without any particular limitation as long as it can serve as a medium through which the ions involved in the electrochemical reactions of the battery can move. Specifically, the organic solvent may include ester-based solvents such as methyl acetate, ethyl acetate, γ-butyrolactone, or ε-caprolactone; ether-based solvents, such as dibutyl ether or tetrahydrofuran; ketone-based solvents, such as cyclohexanone; aromatic hydrocarbon-based solvents, such as benzene or fluorobenzene; carbonate-based solvents, such as dimethylcarbonate (DMC), diethylcarbonate (DEC), methylethylcarbonate (MEC), ethylmethylcarbonate (EMC), ethylenecarbonate (EC), or propylene carbonate (PC); alcohol-based solvents, such as ethyl alcohol, or isopropyl alcohol; nitriles, such as R-CN (where R is a straight-chain, branched, or cyclic hydrocarbon group having 2 to 20 carbon atoms, which may contain an unsaturated ring or an ether linkage); amides, such as dimethylformamide; dioxolanes, such as 1,3-dioxolane; or sulfolanes. Among them, carbonate-based solvents are preferred, and a mixture of cyclic carbonate (e.g., ethylene carbonate or propylene carbonate) having high ionic conductivity and high dielectric constant that can improve the charge and discharge performance of the battery and a linear carbonate-based compound (e.g., ethylmethylcarbonate, dimethylcarbonate, or diethylcarbonate) having low viscosity is more preferred. In this case, the cyclic carbonate and the linear carbonate are preferably mixed at a volume ratio of about 1:1 to about 1:9, whereby the electrolyte can exhibit improved performance of the electrolyte.

The lithium salt may be used without particular limitation as long as it is a compound capable of providing lithium ions for use in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably within the range of 0.1M to 2.0M. When the concentration of lithium salt falls under the above range, the electrolyte has appropriate conductivity and viscosity, so that it can exhibit good electrolyte performance, and the lithium ions can move effectively.

In addition to the above electrolyte components, the electrolyte may contain at least one additives, for example, haloalkylenecarbonate-based compounds such as difluoroethylenecarbonate, pyridine, triethylphosphite, triethanolamine, cyclic ethers, ethylene diamine, n-glyme, hexanoic acid triamide, nitrobenzene derivatives, sulfur, quinonimine dyes, N-substituted oxazolidinones, N,N-substituted imidazolidines, ethylene glycol dialkyl ethers, ammonium salts, pyrrole, 2-methoxyethanol or aluminum trichloride, for the purpose of improving the lifetime characteristics of the battery, inhibiting the reduction of the cell capacity, and improving the discharge capacity of the battery. The additive may be comprised in an amount of 0.1% by weight to 5% by weight based on the total weight of the electrolyte.

A lithium secondary battery comprising an electrode prepared using the carbon nanotube dispersion according to the present invention, more particularly, a lithium secondary battery comprising an electrode prepared using a carbon nanotube dispersion, can stably exhibit excellent discharge capacity and output characteristics because the carbon nanotubes are uniformly dispersed in the electrode, and the content thereof can be reduced compared to the case of comprising conventional conductive materials such as carbon black. As a result, it can be usefully applied in the field of portable devices such as cell phones, laptop computers, digital cameras, and electric vehicles such as hybrid electric vehicles (HEVs).

Accordingly, according to another example of the present invention, there may be provided the lithium secondary battery, a battery module comprising the lithium secondary battery as a unit cell and a battery pack comprising same.

The battery module or battery pack may be utilized as a power of one or more of the following medium- to large-sized devices: a power tool; an electric vehicle, including an electric vehicle (EV), a hybrid electric vehicle, and a plug-in hybrid electric vehicle (PHEV); or a system for storing power.

### [Mode for Practicing the Invention]

Hereinafter, Examples are presented to facilitate an understanding of the present invention. The following examples are provided to illustrate the present invention, but the present invention is not limited thereto.

### Examples

### Example 1

(1) In a homo mixer, multi-walled carbon nanotubes (MWCNTs, LG Chem, BT1001M) with a specific surface area of 250 m²/g and an average particle size (D₅₀) of 5 µm were mixed in a ratio of carbon nanotubes purified with high temperature to carbon nanotubes purified with acid to 6:4. 15% by weight of the mixed carbon nanotubes based on a total of 100% by weight of the dispersion and 25 parts by weight of polyvinyl pyrrolidone (PVP, Hefei Zhaohui New Material Technology Co, Ltd, K30) as a primary dispersant based on a total of 100 parts by weight carbon nanotubes were added and mixed for 4 hours. Methylpyrrolidone (N-Methyl-2-pyrrolidone, NMP) was used as a solvent.
(2) After step (1), the secondary dispersant (N25542, BYK) comprising about 60% by weight of cellulose, 10% by weight of polycaprolactone (PCL), and 10% by weight of polypropylene glycol (PPG), based on a total of 100% by weight of the secondary dispersant, was added in an amount of 5 parts by weight to the carbon nanotubes, based on a total of 100 parts by weight of the carbon nanotubes, and the solvent was added and adjusted to achieve the content of multi-walled carbon nanotubes of 8.5%, then mixed for 0.5 hours.
(3) After step (2), 25 parts by weight of monoethanolamine was added as an additive, based on a total of 100 parts by weight of carbon nanotubes, and a solvent was added and adjusted to achieve the content of carbon nanotubes of 5.6%, then mixed for 0.5 hours.
(4) Using a high pressure homogenizer (MN400BF, Picomax), the prepared carbon nanotube composition was subjected to five passes under a pressure of 15,000 psi, wherein one passage was counted as one pass, to obtain a final carbon nanotube dispersion. The final content of carbon nanotubes was 4.2%.

### Example 2

The carbon nanotube dispersion was prepared in the same manner as in Example 1 above, except that 26 parts by weight of the primary dispersant was added in step (1), 9 parts by weight of the secondary dispersant was added in step (2), and 5 parts by weight of the additive was added in step (3) based on a total of 100 parts by weight of carbon nanotubes.

### Example 3

The carbon nanotube dispersion was prepared in the same manner as in Example 1 above, except that 25 parts by weight of the primary dispersant was added in step (1), 5 parts by weight of the secondary dispersant was added in step (2), and 25 parts by weight of the additive was added in step (3) based on a total of 100 parts by weight of carbon nanotubes.

### Comparative Example 1

The carbon nanotube dispersion was prepared in the same manner as in Example 3 above, except that 30 parts by weight of the primary dispersant, 5 parts by weight of the secondary dispersant, 25 parts by weight of the additive based on a total of 100 parts by weight of carbon nanotubes were added in step (1), and steps (2) and (3) were not performed.

### Comparative Example 2

The carbon nanotube dispersion was prepared in the same manner as in Comparative Example 1 above, except that 30 parts by weight of the primary dispersant, 5 parts by weight of the secondary dispersant, 50 parts by weight of the additive based on a total of 100 parts by weight of carbon nanotubes were added in step (1).

### Comparative Example 3

The carbon nanotube dispersion was prepared in the same manner as in Example 1 above, except that 30 parts by weight of the primary dispersant and 50 parts by weight of the additive were added in step (1), 5 parts by weight of the secondary dispersant was added in step (2), based on a total of 100 parts by weight of carbon nanotubes, and step (3) was not performed.

### Comparative Example 4

The carbon nanotube dispersion was prepared in the same manner as in Comparative Example 3 above, except that 26 parts by weight of the primary dispersant and 25 parts by weight of the additive were added in step (1), and 9 parts by weight of the secondary dispersant was added in step (2), based on a total of 100 parts by weight of carbon nanotubes.

### Comparative Example 5

The carbon nanotube dispersion was prepared in the same manner as in Example 1 above, except that 22.5 parts by weight of the primary dispersant was added in step (1), and 7.5 parts by weight of the secondary dispersant was added in step (2), based on a total of 100 parts by weight of carbon nanotubes, and no additive was added.

### Comparative Example 6

The carbon nanotube dispersion was prepared in the same manner as in Example 1 above, except that 22.5 parts by weight of the primary dispersant was added in step (1), and 50 parts by weight of the additive was added in step (3), based on a total of 100 parts by weight of carbon nanotubes, and no secondary dispersant was added.

### Experimental Example

### Experimental Example 1: Measuring the particle size distributions of the carbon nanotube dispersions

About 200 ml of methylpyrrolidone was filled into the Mastersizer 3000 apparatus from Malvern, the carbon nanotube dispersions of Examples 1 to 3 and Comparative Examples 1 to 6 were added in an amount of 0.5 ml or less, and carbon nanotube particle size distributions D₁₀, D₅₀ and D₉₀ were measured. The results are shown in Table 1 below.

**[Table 1]**

| | Particle size (µm) | | |
|---|---|---|---|
| | D₁₀ | D₅₀ | D₉₀ |
| Example 1 | 1.0 | 2.1 | 6.2 |
| Example 2 | 1.0 | 2.1 | 6.3 |
| Example 3 | 1.0 | 2.0 | 4.1 |
| Comparative Example 1 | 1.1 | 2.3 | 5.4 |
| Comparative Example 2 | 1.1 | 2.3 | 5.8 |
| Comparative Example 3 | 1.1 | 2.0 | 4.7 |
| Comparative Example 4 | 1.1 | 2.1 | 5.1 |
| Comparative Example 5 | 1.1 | 2.2 | 4.7 |
| Comparative Example 6 | 1.1 | 2.1 | 4.8 |

According to Table 1 above, the carbon nanotube dispersions of Examples 1 to 3 exhibited similar particle size distributions to the carbon nanotube dispersions of Comparative Examples 1 to 6.

### Experimental Example 2: Measuring the viscosity changes in the carbon nanotube dispersions

Viscosities of the carbon nanotube dispersions of Examples 1 to 3 and Comparative Examples 1 to 6 were measured, and they were measured again after being left at 25 °C for not more than 5 days, and the results are shown in Table 2 below.

Viscosities were measured using a viscometer (Brookfield RV-04, Spindle: 04) at 25 °C, 40 rpm.

The viscosity increase rate (%) was calculated using Formula 1 below and shown in Table 2. [Formula 1] 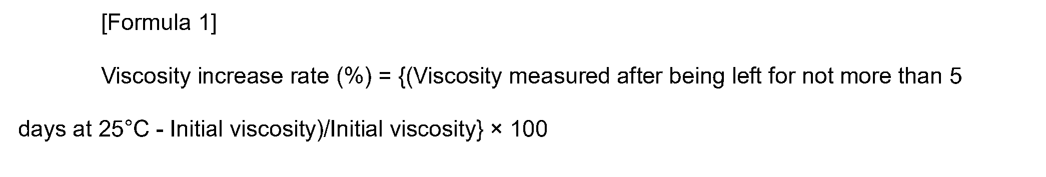 Viscosity increase rate (%) = {(Viscosity measured after being left for not more than 5 days at 25°C - Initial viscosity)/Initial viscosity} × 100

**[Table 2]**

| | Viscosity (Pa·s) | | Viscosity increase rate (%) |
|---|---|---|---|
| | After dispersion | After being left for 5 days or less | |
| Example 1 | 0.265 | 0.270 (5 days) | 1 |
| Example 2 | 0.115 | 0.135 (5 days) | 17 |
| Example 3 | 0.265 | 0.285 (3 days) | 7 |
| Comparative Example 1 | 1.100 | 3.385 (5 days) | 207 |
| Comparative Example 2 | 0.600 | 2.410 (5 days) | 301 |
| Comparative Example 3 | 0.230 | 1.550 (3 days) | 573 |
| Comparative Example 4 | 0.120 | 0.610 (4 days) | 408 |
| Comparative Example 5 | 2.969 | 5.520 (3 days) | 185 |
| Comparative Example 6 | 0.625 | 1.466 (3 days) | 234 |

According to Table 2 above, it can be seen that the carbon nanotube dispersions of Examples 1 to 3 prepared by stepwise addition of the dispersants and additive in three portions have similar or lower viscosities immediately after dispersion compared to the carbon nanotube dispersions of Comparative Examples 1 to 4 prepared by adding the dispersants and additive in one or two portions, and the carbon nanotube dispersion of Comparative Example 5 with no addition of the additive, and the carbon nanotube dispersion of Comparative Example 6 with no addition of the secondary dispersant.

It can also be seen that the dispersions of Examples 1 to 3 can effectively suppress the viscosity increase over time compared to those of Comparative Examples 1 to 6.

All simple variations or modifications of the invention fall within the scope of the invention, and the specific scope of protection of the invention will be made clear by the appended claims of the patent.

## Claims

1. A method of preparing a carbon nanotube dispersion comprising carbon nanotubes, a solvent, a primary dispersant, a secondary dispersant, and an additive, which comprises the steps of (1) adding and mixing carbon nanotubes, a primary dispersant, and a solvent;
(2) adding the secondary dispersant and solvent to the mixture obtained in step (1) and mixing them; and
(3) adding the additive and solvent to the mixture obtained in step (2) and mixing them.

2. The method of preparing a carbon nanotube dispersion according to claim 1,
wherein the primary dispersant comprises at least one of hydrogenated nitrile butadiene rubber and polyvinylpyrrolidone,
the secondary dispersant comprises at least one of polypropylene, styrene, cellulose, polycaprolactone, polypropylene glycol, and polyethylene glycol, and
the additive comprises at least one of 2-amino-2-methyl-1-propanol, 2-methylamino-2-methyl-1-propanol and monoethanolamine.

3. The method of preparing a carbon nanotube dispersion according to claim 1,
wherein the method further comprises, after step (3), step of (4) high-pressure homogenizing the mixture obtained in step (3) by means of a high pressure homogenizer at a pressure of 5,000 psi to 30,000 psi, one to seven times.

4. The method of preparing a carbon nanotube dispersion according to claim 1,
wherein the content of carbon nanotubes in the carbon nanotube dispersion is 2% by weight to 7% by weight based on a total of 100% by weight of the dispersion.

5. The method of preparing a carbon nanotube dispersion according to claim 1,
wherein the content of carbon nanotubes in the mixture obtained in step (1) is 10% by weight to 20% by weight based on a total of 100% by weight of the dispersion,
wherein the content of carbon nanotubes in the mixture obtained in step (2) is 5% by weight to 15% by weight based on a total of 100% by weight of the dispersion, and
wherein the content of carbon nanotubes in the mixture obtained in step (3) is 2% by weight to 8% by weight based on a total of 100% by weight of the dispersion.

6. The method of preparing a carbon nanotube dispersion according to claim 1,
wherein the step (1) is performed for 2 to 7 hours,
wherein the step (2) is performed for 0.1 to 2 hours,
wherein the step (3) is performed for 0.1 to 2 hours.

7. The method of preparing a carbon nanotube dispersion according to claim 1,
wherein the primary dispersant in step (1) is added in an amount of 10 parts by weight to 50 parts by weight based on a total of 100 parts by weight of carbon nanotubes,
wherein the secondary dispersant in step (2) is added in an amount of 1 part by weight to 15 parts by weight based on a total of 100 parts by weight of carbon nanotubes,
wherein the additive in step (3) is added in an amount of 1 part by weight to 30 parts by weight based on a total of 100 parts by weight of carbon nanotubes.

8. The method of preparing a carbon nanotube dispersion according to claim 1,
wherein the carbon nanotubes are multi-walled carbon nanotubes.

9. The method of preparing a carbon nanotube dispersion according to claim 1,
wherein the carbon nanotube dispersion has a viscosity increase rate of 50% or less after being left at 25°C for no more than 5 days.

10. The method of preparing a carbon nanotube dispersion according to claim 1,
wherein the solvent is methylpyrrolidone.

11. A slurry composition for preparing an electrode of a lithium secondary battery, comprising a carbon nanotube dispersion prepared by the method according to claim 1 and an electrode active material.
